# EUROPEAN PATENT SPECIFICATION

(11) **EP 2 258 579 B1**
(45) Date of publication and mention of the grant of the patent: **27.04.2016**
(21) Application number: 09425218.6
(22) Date of filing: 03.06.2009
(51) Int. Cl.: B60L 1/00, H02J 7/34, H02J 7/35, H02J 7/00, B60R 16/03

(54) **Additional autonomous power supply system for vehicle, especially for industrial or commercial vehicle**
Zusätzliches selbständiges Stromversorgungssystem für ein Fahrzeug, insbesondere für ein Industrie- oder Nutzfahrzeug
Système d'alimentation électrique autonome supplémentaire pour véhicule, en particulier pour un véhicule industriel ou commercial

(43) Date of publication of application: 08.12.2010
(73) Proprietor: Iveco S.p.A., 10156 Torino (IT)
(72) Inventor: Bertozzi, Franco, 10040 Druento (IT); Pacini, Fabrizio, 10156 Torino (IT)
(74) Representative: Franzolin, Luigi

(56) References cited:
- WO-A-2007/025096
- DE-C1- 3 841 769
- US-A- 5 905 356

## Description

### Application field of the invention

The present invention relates to the field of power supply for vehicle, and in particular to an additional autonomous power supply system for vehicle, in particular an industrial or commercial vehicle.

### Description of the prior art

Vehicles, especially the cabins of industrial or commercial vehicles, have, at present, various accessories, for example a food heater, a fridge or a mobile phone, laptop, etc. in charge, which are characterized by a high consumption of electric current.

The driver or the passenger of an industrial vehicle, mainly use one or more 12V sockets available in the cabin, for the withdrawal of the current.

At present these sockets are power supplied by means of the primary starting batteries of the vehicle, which normally generate a 24 V voltage. This voltage is then lowered to 12 V by a device which converts the battery voltage. The starting batteries of the vehicle are recharged by the electric generation system activated by the primary engine.

Some of these accessories are power supplied also when the primary engine is stopped, since, for example, they are operating during the overnight stops, which are often long and last the whole night. In some parking places it is not allowed to park and keep the vehicle engine started during the stop, and therefore it is not possible to start it for recharging the batteries, so it would be necessary to leave and move the vehicle.

Primary batteries are generally not suitable for cyclic charging and discharging, which is a typical property of batteries used for this kind of accessories, and are damaged if the charging level goes below a certain threshold.

Therefore, in order to avoid damaging, it is now necessary to oversize the primary batteries in order to satisfy the need of power supplying the accessory devices, while for the primary functions of the vehicle, such as starting, turning the headlights on, power supplying the vehicular control units, a lower power produced by smaller primary batteries could be enough. Consequently, primary batteries are more expensive and heavier, and moreover they are not the most suitable type of battery for providing electric current for continual consumption, while they are more suitable for providing high starting current.

DE3841769 discloses a system for avoiding the critical discharge of the primary battery of a combustion engine vehicle. In order to ensure the provision of starting energy in motor vehicles with internal combustion engines, the voltage of the primary battery is monitored whenever the generator of the vehicle's electrical system has been stationary. When the voltage drops below an adjustable voltage limit, the primary battery is disconnected from the vehicle's electrical system via a voltage-controlled relay switch.

Usually current is provided by 12 V sockets, because these accessories are designed to work also on cars and not only on heavy vehicles where battery voltage is 24 V, therefore a device for reducing the voltage from 24 to 12 V is also needed.

In the cabin of a heavy vehicle there are at least two 12 v sockets, there is also one socket near the bed: each socket may deliver up to 10 A.

### Summary of the invention

Therefore the aim of the present invention is to provide an additional autonomous power supply system for vehicle, especially for industrial or commercial vehicles, suitable for overcoming all the drawbacks mentioned above.

The main idea of this invention is to make the various 12 V sockets for the accessories independent from the primary batteries, by creating an autonomous system that will allow to use lighter and cheaper primary batteries only for vehicular functions.

More in particular, the idea is making the power supply of the accessories independent from vehicle's batteries by means of a system of additional hermetic batteries, which are maintenance-free and are suitable for cyclic charge-discharge.

The subject of the present invention is an additional autonomous power supply system for vehicle, especially for industrial or commercial vehicle, according to claim 1. In particular the subject of the present invention is an additional autonomous power supply system for vehicle, especially for industrial or commercial vehicle, as described more fully in the claims, which are an integral part of this description.

### Brief description of the Figures

Further purposes and advantages of the present invention will become clear from the following detailed description of a preferred embodiment (and relative alternative embodiments) and the drawings that are attached hereto, which are merely illustrative and not limitative, in which:

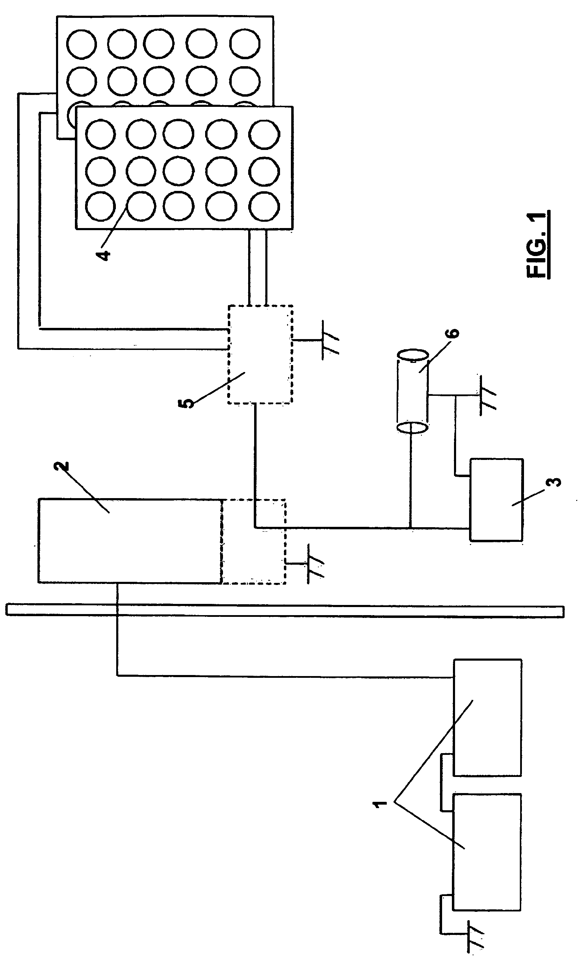

figure 1 shows a general circuit scheme of the additional autonomous power supply system according to the present invention.

### Detailed description of preferred embodiments of the invention

In figure 1 number 1 indicates the primary batteries of the vehicle. A heavy vehicle generally have two 12 V batteries connected in series in order to have a 24 V voltage at the external terminals.

Number 2 indicates a voltage divider which receives a 24 V voltage in input from the primary batteries 1 and provides a 12 V voltage in output to an additional battery system of the hermetic type 3, which, according the invention, will be used for power supplying the accessories normally used in the vehicle's cabin, by means of the various 12 V sockets 6 available.

The recharging of the additional battery system of the hermetic type 3 is carried out essentially in two ways:
- when the vehicle engine is started, the recharging takes place by means of the primary batteries 1 and of the voltage divider 2 from 24 V to 12 V, when present, for example a 10 A DC/DC converter, and/or by means of an external recharging system, e.g. by means of one or more 12V solar panels 4.
- when the vehicle engine is stopped, the recharging takes place by means of the external system, while the connection with the primary batteries is interrupted; the latter being recovered only in case of absence of light, by means of the voltage divider 2, if the charging level is critical or in case of detected failure.

Solar panels may be placed on the upper part of the vehicle; for example they may be of the flexible type in order to follow the outline of the surface where they are placed. It is possible to use solar panels which can provide currents of about 2 A and having a voltage of 14 V.

A charge controller circuit 5 is also present and is suitable to control the charging of the additional hermetic battery system 3 in the sense explained above. Moreover it disconnects the power supply of the additional hermetic battery system 3 when the latter is full.
The charge controller may be an independent component, or its function may be performed by a variant of the voltage divider 2 whose input are also the solar panels.

The hermetic battery may be of a type known in the art, and is of a different type with respect to the primary batteries: it is small and less heavy, suitable for cyclic discharge, it may be easily placed in any place in the cabin, e.g. under the bed, it is of the maintenance-free type, it may be turned upside down, it does not have any cap, it may be positioned upside-down or laid horizontally, it does not suffer from complete discharge, therefore it may be discharged completely without having problems, while the primary batteries would have been damaged so that it would be necessary to replace them.
It can be recharged when the vehicle is started, while when the vehicle is stationary primary batteries are not affected and it is possible to use 12V solar panels.

This way the primary batteries of the vehicle may have dimensions suitable for power supplying only the primary functions of the vehicle, such as starting, turning the headlights on, power supplying the vehicular control unit: therefore less power is enough. The power is determined on the basis of regulations fixing the value of the starting current at -18 °C.

For example, in case of large-sized industrial vehicle, primary batteries are now of the 220 Ah type, each of these weighing 58 Kg. While, using the system according to this invention, the batteries may be reduced to the 130 Ah type, each of these weighing 43 Kg, or 110 Ah, weighing 35 Kg.

One of the batteries that may be used according to this invention is for example of the 32 Ah type, weighing 11 Kg, or of the 24 Ah type, weighing 7 Kg. Its cost and its weight are remarkably lower than the ones of an equivalent primary battery.

It will be apparent to the person skilled in the art that other alternative and equivalent embodiments of the invention can be conceived and reduced to practice without departing from the scope of the invention.

The advantages deriving from the use of this invention are evident, and result in:
- higher endurance with the engine stopped;
- smaller starting batteries;
- lower or zero current withdrawal from vehicle's batteries;
- smaller DC/DC converters being used;
- lowering of the stress for the alternator, which can be smaller;
- lower fuel consumption.

From the description set forth above it will be possible for the person skilled in the art to embody the invention with no need of describing further construction details.

## Claims

1. Additional autonomous power supply system for a vehicle comprising a vehicle engine, especially for industrial or commercial vehicle, said vehicle being provided with primary batteries (1) having a 24 V voltage at the external terminals used only for power supplying the primary functions of the vehicle such as starting, turning the headlights on, power supplying a vehicular control unit and being recharged by an electric generation system activated by the vehicle engine, said additional autonomous power supply system comprising:
- an additional system of one or more hermetic batteries (3), for power supplying the accessories used in the vehicle's cabin;
- an external recharging system comprising solar panels (4);
- means for recharging said additional system comprising a voltage divider (2) which receives said 24 V voltage as an input from the primary batteries (1) and which receives as an input also the solar panels, wherein the voltage divider (2) provides a 12 V voltage as an output;
- means for controlling said recharging (5) of the additional battery system, performing said control in such a way as:
- when the vehicle engine is started, said recharging takes place by means of primary batteries (1), and/or by means of the external recharging system belonging to said means for recharging;
- when the vehicle engine is stopped, said recharging takes place by means of said solar panels (4), while the connection with the primary batteries (1) is interrupted; the latter being recovered only in case of absence of light, if the charging level is critical or in case of detected failure.

## Patentansprüche

1. Zusätzliches selbständiges Stromversorgungssystem für ein Fahrzeug, insbesondere für ein Industrie- oder Nutzfahrzeug, welches Fahrzeug mit Primärbatterien (1) ausgestattet ist, die an ihren äußeren Anschlüssen eine 24 V-Spannung aufweisen, die lediglich zur Stromversorgung der Pumärfunktionen des Fahrzeugs wie etwa Starten, Einschalten der Scheinwerfer, Stromversorgung einer Fahrzeug-Steuereinheit verwendet werden, und welche durch ein elektrisches Erzeugungssystem geladen werden, das durch den Fahrzeugmotor aktiviert wird, welches zusätzliche selbständige Stromversorgungssystem umfasst:
- ein zusätzliches System von einer oder mehreren hermetischen Batterien (3) zur Stromversorgung der Zusatzeinrichtungen, die in der Fahrzeugkabine verwendet werden;
- ein äußeres Aufladungssystem mit Solarpaneelen (4);
- Mittel zum Aufladen des zusätzlichen Systems, mit einem Spannungsteiler (2), welcher die 24 V-Spannung als einen Eingang von den Primärbatterien (1) erhält, und welches als Eingang ferner die Solarpaneele erhält, wobei der Spannungsteiler (2) eine 12 V-Spannung als eine Ausgabe liefert;
- Mittel zur Steuerung des Aufladens (5) des zusätzlichen Batteriesystems, welche die Steuerung auf die folgende Weise vornehmen:
- wenn der Fahrzeugmotor gestartet wird, findet das Wiederaufladen durch die Primärbatterien (1) statt und/oder durch das externe Aufladungssystem, das zu den Mitteln zum Wiederaufladen gehört;
- wenn der Fahrzeugmotor angehalten wird, findet das Wiederaufladen durch die Solarpaneele (4) statt, während die Verbindung mit dem Primärbatterien (1) unterbrochen ist; die letzteren werden lediglich bei Abwesenheit von Licht aufgeladen, falls das Ladungsniveau kritisch ist, oder im Fall eines detektierten Fehlers.

## Revendications

1. Système d'alimentation autonome supplémentaire pour un véhicule comprenant un moteur de véhicule, particulièrement pour un véhicule industriel ou commercial, ledit véhicule étant pourvu de batteries principales (1) ayant une tension de 24 V aux bornes externes utilisées uniquement pour alimenter les fonctions principales du véhicule telles que démarrer, allumer les phares, alimenter une unité de commande de véhicule, et qui sont rechargées par un système de génération électrique activé par le moteur de véhicule, ledit système d'alimentation autonome supplémentaire comprenant :
- un système supplémentaire d'une ou de plusieurs batteries hermétiques (3), pour alimenter les accessoires utilisés dans la cabine du véhicule ;
- un système de recharge externe comprenant des panneaux solaires (4) ;
- des moyens pour recharger ledit système supplémentaire comprenant un diviseur de tension (2) qui reçoit ladite tension de 24 V en tant qu'entrée des batteries principales (1) et qui reçoit également en tant qu'entrée les panneaux solaires, dans lequel le diviseur de tension (2) fournit une tension de 12 V en tant que sortie ;
- des moyens pour commander ladite recharge (5) du système de batterie supplémentaire, effectuant ladite commande d'une manière telle que :
- lorsque le moteur de véhicule est démarré, ladite recharge a lieu au moyen des batteries principales (1), et/ou au moyen du système de recharge externe appartenant aux dits moyens pour recharger ;
- lorsque le moteur de véhicule est arrêté, ladite recharge a lieu au moyen desdits panneaux solaires (4), tandis que la connexion avec les batteries principales (1) est interrompue ; cette dernière étant rétablie uniquement en cas d'absence de lumière, si le niveau de charge est critique ou dans le cas d'une panne détectée.
